# EUROPEAN PATENT APPLICATION

(11) **EP 1 677 027 A1**
(43) Date of publication of application: **05.07.2006**
(21) Application number: 05112702.5
(22) Date of filing: 22.12.2005
(51) Int. Cl.: F16F 13/14, F16F 13/20, F16F 13/26

(54) **Elastomeric/hydraulic vibration isolator with adjustable damping**

(30) Priority: 31.12.2004 US 26761
(71) Applicant: THE GOODYEAR TIRE & RUBBER COMPANY, Akron, Ohio 44316-0001 (US)
(72) Inventor: Franck, Randall Lee, Berne, IN Indiana 46711 (US); Mullenhour, Christopher Michael, Sidney, OH Ohio 45365 (US)
(74) Representative: Kutsch, Bernd

(57) **Abstract**

A bush type mounting device includes an outer sleeve (12); an intermediate sleeve (14), radially inward from said outer sleeve defining an annular space; an inner portion (16) radially inward from said intermediate sleeve; a spring material (19) bonded to an outer surface of the inner metal and to an inner surface of said intermediate sleeve diametrically located to provide said device with a main fluid chamber (20) and at least two additional fluid chambers (21,22), each containing a fluid and said main chamber being fluidly connected to the first fluid chamber and said first chamber is fluidly connected to the second fluid chamber; an inertial damping channel (27) molded in the annular space connecting the main and said second fluid chamber; and a coupling/decoupling means (40) to alternately couple and at least partially decouple the vibration damping action of the fluid flow through the damping channel, where the coupling/decoupling means includes a flexible extensible elastomeric diaphragm (25) sealingly attached to the intermediate sleeve to create an air chamber (24), the diaphragm being deflectable into the first fluid chamber (21) a distance relative to the pressure differential between the fluid pressure in the main fluid chamber and the air pressure in the air chamber, one surface of the diaphragm facing the fluid chamber and the opposite surface thereof defining said air chamber, the intermediate sleeve having a port extending through the wall thereof and to permit the flow of air in and out of the air chamber, and a means to control the flow of air through the port in and out of the air chamber to effect pressure changes within the cavity and thereby change the amount of deflection of the diaphragm.

## Description

### Background of the invention

The present invention relates in general to a bush type mounting devices, especially fluid-filled cylindrical elastic mount for damping or isolating vibrations based on flows of a non-compressible fluid contained therein. More particularly, the present invention is concerned with such a fluid-filled elastic mount which is capable of internal damping decoupling for small amplitudes.

Bush type hydraulically damped mounting devices are known. These can be cylindrical elastic vibration damping mount members interposed between two members of a vibration system, for flexibly connecting these two members. Usually, the anchor part for one part of the vibrating machinery is in the form of a hollow sleeve with the other anchor part in the form of a rod or tube extending approximately centrally and coaxially of the sleeve. Resilient walls then join the sleeve and the tube and usually define two chambers connected by a passage way. The chambers are filled with hydraulic fluid, and the movement of the fluid from one chamber to the other through the passageway damps the vibration of the parts of the machinery attached to the respective anchor points. See for example, US-B- 4,771,990 and US-B-5,044,813 and JP-A- 61-206838.

This type of cylindrical elastic mount can be made relatively compact and small-sized, and can be readily designed for a comparatively reduced amount of relative radial displacement between the inner and outer sleeves upon application of even an excessively large vibrational load. For these reasons, the cylindrical elastic mount has been widely used as an engine mount, a differential gear mount and a suspension bushing for automotive vehicles.

In addition to inertial damping of vibrations having a high amplitude, e.g. greater than 0.5 mm, and low frequency, e.g. about 4-15 Hz., it is desirable to provide for damping decoupling for vibrations having a low amplitude, e.g. less than 0.5 mm, and high frequency, e.g. about 8-30 Hz.

In US-B- 4,690,389 a fluid-filled elastic mount, a non-compressible fluid filling the fluid chambers is forced to flow through an orifice passage, based on relative pressure changes in the fluid chambers which occur when a vibrational load is applied between the inner and outer sleeves. In this fluid-filled cylindrical elastic mount, an improvement in the vibration damping/isolating function based on the resonance of the fluid is provided with respect to only the vibrations whose frequencies are in the neighborhood of the frequency to which the orifice passage is tuned. For instance, the orifice passage may be tuned to effectively provide a high damping effect with respect to relatively low-frequency vibrations based on the fluid resonance. In this case, the orifice passage operates as if it were substantially closed when the frequency of the input vibration is higher than the tuned frequency of the orifice passage. Accordingly, the elastic mount exhibits an excessively high dynamic spring constant, i.e., considerably lowered vibration isolating or damping effect, with respect to the input vibration having a relatively high frequency.

US-B- 5,098,072 teaches a fluid-filled elastic mount including an elastic body interposed between an inner and an outer sleeve, a pressure-receiving chamber disposed between the two sleeves, a first and a second equilibrium chambers partially defined by respective flexible diaphragms for absorbing pressure chambers in the two equilibrium chambers: a first and a second air chamber corresponding to the first and second equilibrium chambers, for permitting elastic deformation of the respective diaphragms; and a first and a second orifice passage for fluid communication between the pressure-receiving and the first and the second equilibrium chambers.

US-B-5,286,011 teaches a bush type mounting device having outer and intermediate sleeves, an inner metal portion and a rubber spring between the inner metal and the intermediate sleeve. The device has an inertial damping channel in an annular space between the outer sleeve and the intermediate sleeve. Damping decoupling is provided by a decoupling pneumatic chamber which extends radially outward from the intermediate sleeve in close association with a holding device.

### Summary of the invention

The present invention is the result of the discovery that the dynamic spring rate and damping of a fluid filled hydrobushing can be managed using a pneumatic control.

The invention relates to a bush type mounting device according to claim 1. Dependent claims cover preferred embodiments of the invention.

### Brief description of the drawings

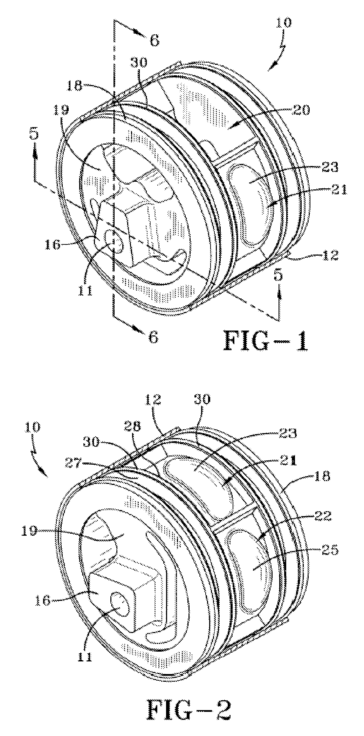

FIG. 1 is a perspective view, partly in section, of the top of the bush type mounting device.
FIG. 2 is a view similar to FIG. 1 of the bottom of the mounting device.
FIG. 3 is a top plan view of the mounting device, partly is section.
FIG. 4 is a side view, partly in section.
FIG. 5 is a cross-sectional view taken along line 5--5 of FIG. 4 from side to side and including the decoupler assembly of the present invention.
FIG. 6 is a cross-sectional view taken along line 6--6 of FIG. 3 from top to bottom.

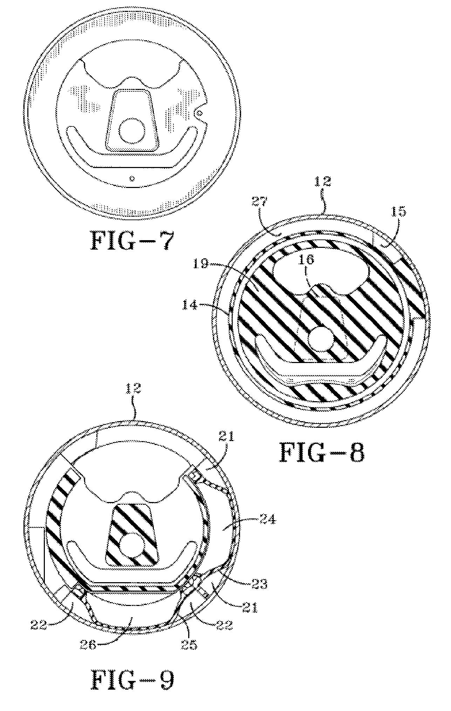

FIG. 7 is an end view taken along line 7--7 of FIG. 3.
FIG. 8 is a cross-sectional view taken along line 8--8 of FIG. 3 illustrating the damping channel of the mounting device.
FIG. 9 is a cross-sectional view taken along line 9--9 of FIG. 3.
FIG. 10 is a diagrammatic representation illustrating the flow of the hydraulic fluid within the damping channel, the main fluid chamber and the first and second fluid chambers.
FIG. 11 is a cross-sectional view similar to FIG. 5, but showing another embodiment of the decoupler assembly of the present invention.
FIG. 12 is an enlarged cross-sectional view of the first air chamber of the present invention with the diaphragm depressed.

### Detailed description of the invention

The drawings illustrate a bush type mounting device shown generally at 10 having an outer sleeve 12, an intermediate sleeve 14 having radially outward flanges 18 located radially inward from the outer sleeve 12 to define an annular space. Radially inward from the intermediate sleeve 14 is the inner metal portion 16 which can have an aperture 11 through it for attaching the mount, or mounting bolts (not shown) in place of the aperture may be attached for affixing the mount. A rubber spring 19 is bonded between an outer surface of the inner metal 16 and an inner surface of the intermediate sleeve 14 and provides a main fluid chamber 20, a first fluid chamber 21 and a second fluid chamber 22. The first fluid chamber 21, has a diaphragm 23 in it which forms a first air chamber 24, while the second fluid chamber 22 also has a diaphragm 25 which forms a second air chamber 26. Both of the air chambers are bonded to the inner metal 14 and have convex shapes which allow for diaphragm expansion into the fluid chambers, as will be explained in further detail hereinafter.

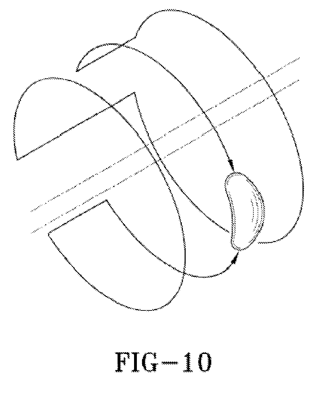

The device is completely filled with an incompressible fluid, such as a hydraulic fluid, and inertial damping is provided by the narrow channel 27 which is comprised of two circumferential grooves axially outward of the chambers, each with an opening to one of the chambers and a crossover axial groove 28 diametrically opposite the decoupling pneumatic chamber. The flow pattern in the damping channel 27 is illustrated in FIG. 10. The outer boundaries of the inertial damping channel are formed by the radially outwardly extending flanges 18 and 30. The inner boundaries of the inertial damping channel 27 are formed of molded rubber or rubber coated metal or plastic depending on what material is chosen for the intermediate sleeve.

The sleeves and the inner metal are generally made of metal. However, it is contemplated that they could be made of engineering thermoplastic. The decoupling pneumatic chamber and the holding means can be made of either metal or thermoplastic. It is preferred that the decoupler pneumatic chamber be made of a thermoplastic, for example, nylon, while the diaphragm will be made of an elastomeric or rubbery material.

Decoupling is provided by pneumatic control of the flow of the fluid to the first fluid chamber and between the main fluid chamber, the inertial damping channel, and the second fluid chamber. During operation of the mounting device, the compression of the spring material will cause the fluid to pumped from the main fluid chamber and in situations where the vibrations are of a relatively low amplitude, the first air chamber will be inflated and prevents flow into the first fluid chamber so that the incompressible fluid will passing through the inertial damping channel. Under conditions of relatively high amplitude, the first air chamber will be collapsed and the fluid will pass into the first fluid chamber in order to dampen the vibration.

In order to accommodate the fluid flow, the second air chamber 26 formed by diaphragm 25 in second fluid chamber 22 is vented to the air by vent line 32. When the fluid flow into the first fluid chamber is restricted because the decoupler resists the collapse of diaphragm 23 and air chamber 24, then diaphragm 25 will collapse from the fluid pressure in fluid chamber 22 and the air in chamber 26 will be vented to the atmosphere via vent line 32. The pressure in diaphragm 23 in first fluid chamber 21 is controlled via decoupler unit 40. Decoupler unit 40 to is in fluid communication with air chamber 24 via an inlet/outlet port 42 which is connected to a tube 44 extending through the wall of intermediate sleeve 14 and to a solenoid valve 62.

The solenoid valve 62 is in turn connected through a tube 64 to another solenoid valve 66. The solenoid valve 62 is presently shown in position to provide open communication between the cavity 24 and the solenoid valve 66 which is presently shown as vented to the outside atmosphere through a large orifice 68.

The solenoid valve 62 also has an off position and a position where the cavity 24 is put in communication with a tube 70 leading to a check valve 72. The solenoid valve 66 also has an off position and a position where the tube 64 is put in communication with a small or restricted orifice 74. The small orifice 74 is sized to provide an optimum level of damping for a specific engine/body/driving condition combination. The amount of damping obtained varies inversely with the size of the orifice.

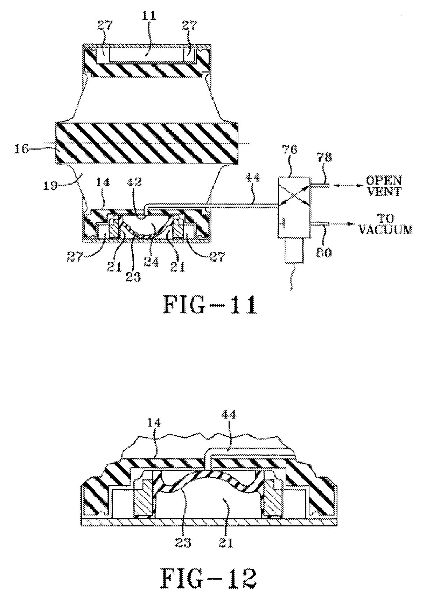

In operation, when the engine mount 12 is mounted on a vehicle (not shown), the interior of the mount 12 is filled with a sufficient amount of liquid so that when vibration occurs and is imparted through the spring member 19, liquid can be pumped back and forth between the main liquid chamber 20 and the secondary chambers 21 and 22 through the damping channel 27, thereby providing damping of the vibration. In order to have full damping, the decoupler must be disengaged. To accomplish this, the solenoid valve 62 is moved to the position where the cavity 24 is in communication with the check valve 72. As the vibration deflects the diaphragm 23 inwardly into the cavity 24, air is ejected through the check valve 72 but cannot return to the cavity 24. As a result of the vibration, the air is rapidly pumped out of the cavity until the diaphragm 23 is drawn completely against the wall of the cavity 24, as shown in FIG. 12. This creates the same effect as though there, was no decoupler and full damping continues until there is a change in the position of the solenoid valves.

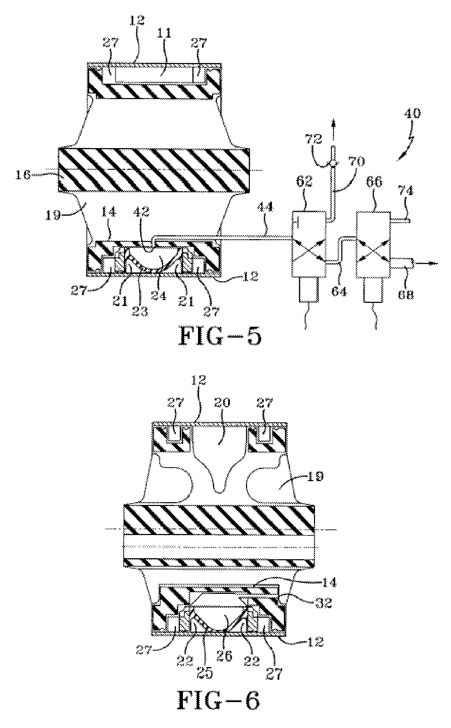

To provide partial decoupling, the solenoid 62 is moved to the position shown in FIG. 5, however solenoid 66 is moved to the position where the tube 64 is in communication with the small or restricted orifice 74. In this intermediate position, there is about 1/3 to 1/2 of full damping. When both solenoid valves are in the position shown in FIG. 5, the damping is almost fully decoupled and very little damping is occurring. In this valve position, the diaphragm 23 can deflect freely in and out of the cavity 24 to decrease the fluid pressure peaks sufficiently that vibrations acting on the fluid will not cause the fluid to flow through the damping channel.

While in FIG. 5 the solenoid valves 62 and 66 are shown connected in a series it should also be recognized that they can be connected in parallel or can be connected individually or only one or the other of the two valves need be connected to the cavity 24.

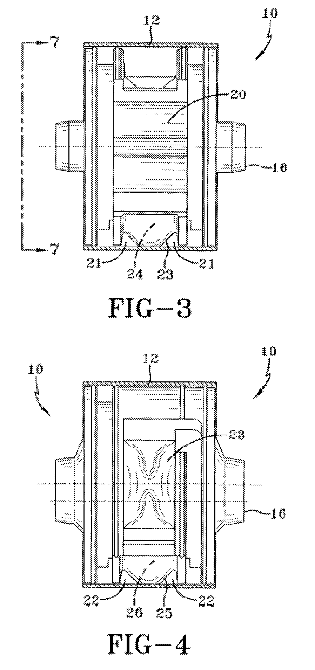

FIG. 11 shows another embodiment of the invention using a solenoid valve 76 having one port 78 open for full venting and another port 80 connected to vacuum to withdraw air from the cavity 24 and draw the diaphragm 23 down against the wall of the cavity 24 as shown in FIG. 3. This performs the same function as the use of the one-way check valve 72 in FIG. 5. When the diaphragm is fully drawn into the cavity 24, the full damping is in effect. When the solenoid is moved to the position where the cavity 24 is in communication with open port 78, there is full venting to the atmosphere and the damping is fully decoupled. Since all the parts of the device shown in FIG. 11 except the solenoid valve 76 are identical to those shown in FIG. 5 the same numerals will be used to identify similar parts and they will not be described separately in the specification.

## Claims

1. A bush type mounting device for damping or isolating vibrations comprising:
(a) an outer sleeve (12);
(b) an intermediate sleeve (14), radially inward from said outer sleeve defining an annular space therebetween;
(c) an inner portion (16) radially inward from said intermediate sleeve;
(d) a spring material (19) bonded to an outer surface of said inner portion (16) and to an inner surface of said intermediate sleeve diametrically located to provide said device with a main fluid chamber (20) and at least two additional fluid chambers (21, 22), each containing a fluid and said main chamber (20) being fluidly connected to said first fluid chamber (21) and said first chamber (21) is fluidly connected to said second fluid chamber (22);
(e) an inertial damping channel (27) molded in said annular space connecting said main and said second fluid chamber; and
(f) a coupling/decoupling means (40) to alternately couple and at least partially decouple the vibration damping action of the fluid flow through the damping channel, **characterized by** said coupling/decoupling means comprising:
(1) a flexible extensible elastomeric diaphragm (25) sealingly attached to the intermediate sleeve to create an air chamber (24), said diaphragm being deflectable into the first fluid chamber (21) a distance relative to the pressure differential between the fluid pressure in the main fluid chamber (20) and the air pressure in the air chamber (24), one surface of the diaphragm (25) facing the fluid chamber (20) and the opposite surface thereof defining said air chamber (24),
(2) the intermediate sleeve (14) having a port extending through the wall thereof and to permit the flow of air in and out of the air chamber, and
(3) means to control the flow of air through the port in and out of the air chamber to effect pressure changes within the cavity and thereby change the amount of deflection of the diaphragm.

2. The mounting device of claim 1, wherein said second fluid chamber has a flexible extensible elastomeric diaphragm sealingly attached to the intermediate sleeve to create an air chamber within said second fluid chamber and, preferably, said air chamber is vented outside of said air chamber.

3. The mounting device of claim 1 or 2, wherein said damping channel is comprised of two circumferential grooves axially outward of said chambers, each with an opening to one of said chambers and a crossover axial groove.

4. The mounting device of at least one of the previous claims, wherein said intermediate sleeve is comprised of a generally cylindrical metal having window openings for the upper and lower chambers and radially outwardly extending flanges which form the axially outward boundaries of said inertial damping channel.

5. The mounting device of at least one of the previous claims, wherein axially inner boundaries of the inertial damping channel are formed of molded rubber, rubber covered metal, or thermoplastic.

6. The mounting device of at least one of the previous claims, wherein the means to control the flow of air in and out of the cavity of the coupling/decoupling means is a valve means operatively connected to the port in the wall of the body member, said valve means alternately connecting the port to a one way check valve permitting air to be only exhausted from the cavity, or connecting the port to at least one orifice of a specified size to permit air to flow in and out of the cavity at a predetermined rate.

7. The mounting device of at least one of the previous claims, wherein the valve means alternately connects the port to a plurality of orifices of different sizes to vary the rate of flow of air in and out of the cavity depending upon what size orifice is selected by the valve means.

8. The mounting device of at least one of the previous claims, wherein the rigid annular body member of the coupling/decoupling means extends around the inside circumference of the annular sidewall with the cavity therein facing radially inwardly into the main fluid chamber.

9. The mounting device of at least one of the previous claims, wherein the means to control the flow of air in and out of the cavity of the coupling/decoupling means is a valve means operatively connected to the port in the wall of the body member, said valve means alternately connecting the port to one of a plurality of orifices of different sizes to vary the rate of air flow in and out of the cavity depending upon which size orifice is selected by the valve means, or closing off the port to seal existing air in the cavity.

10. The mounting device of at least one of the previous claims, wherein the means to control the flow of air in and out of the cavity of the coupling/decoupling means is a valve means operatively connected to the port in the wall of the body member, said valve means alternately connecting the port to communicate with the exterior of the engine mount to effect complete decoupling of vibration damping, or closing off communication between the port and the exterior of the engine mount to seal in any air existing in the cavity of the body member thereby limiting the amount of deflection of the diaphragm to effect partial decoupling of the vibration damping, or connecting the port to a vacuum source to remove air from the cavity and draw the diaphragm into the cavity to effect full coupling of vibration damping.
